# EUROPÄISCHE PATENTSCHRIFT

(11) **EP 2 988 871 B1**
(45) Veröffentlichungstag und Bekanntmachung des Hinweises auf die Patenterteilung: **27.12.2017**
(21) Anmeldenummer: 14734714.0
(22) Anmeldetag: 23.04.2014
(51) Int. Cl.: B01L 3/00, F04B 19/00, G01N 21/11, G01N 21/76, B01L 3/02, G01N 35/10

(54) **VERFAHREN ZUR BEFÜLLUNG EINER MIKROFLUIDISCHEN VORRICHTUNG MITTELS EINES DISPENSIERSYSTEMS, UND ENTSPRECHENDES TESTSYSTEM**
METHOD FOR FILLING A MICROFLUIDIC DEVICE USING A DISPENSING SYSTEM AND CORRESPONDING TEST SYSTEM
PROCÉDÉ DE REMPLISSAGE D'UN DISPOSITIF MICROFLUIDIQUE PAR UN SYSTÈME DE DISTRIBUTION ET SYSTÈME D'ESSAI CORRESPONDANT

(30) Priorität: 25.04.2013 AT 502862013
(43) Veröffentlichungstag der Anmeldung: 02.03.2016
(73) Patentinhaber: Greiner Bio-One GmbH, 4550 Kremsmünster (AT)
(72) Erfinder: MÜLLEDER, Oliver, A-4225 Luftenberg (AT); SONNLEITNER, Max, A-4040 Linz (AT)
(74) Vertreter: Burger, Hannes
(86) Internationale Anmeldenummer: PCT/AT2014/050100
(87) Internationale Veröffentlichungsnummer: WO 2014/172740

(56) Entgegenhaltungen:
- US-A1- 2003 132 112
- US-A1- 2010 221 704
- US-B1- 6 589 790

## Beschreibung

Die Erfindung betrifft ein Verfahren zur Befüllung von Düsen eines Dispensiersystems eines Testsystems, sowie ein Testsystem umfassend ein Dispensiersystem, eine mikrofluidische Vorrichtung und zumindest einen fotosensitiven Sensor mit einer Mehrzahl von Fotodetektoren.

Viele Point-of-Care Testsysteme in der in-vitro Diagnostik verlangen ein manuelles Einbringen diverser Lösungen in ein Probengefäß. So zeigt beispielsweise die WO 2012/080339 A1 ein Messgerät, bei welchem manuell und sequentiell drei unterschiedliche Reagenzien im 10 µl Volumsbereich im Zuge der Testdurchführung eingetropft werden müssen. Dieses manuelle Eintropfen ist von Nachteil, weil die Hands-on-Time beim Abarbeiten des Tests sehr lang ist und Arbeitskraft bindet. Außerdem birgt das manuelle Eintropfen durch geringe Robustheit und Reproduzierbarkeit ein gewisses Risiko, Falschergebnisse zu generieren. Ferner wird in der WO 2012/080339 A1 auch eine Abgabevorrichtung für Reagenzien beschrieben, wobei diese als ein Blister ausgebildet ist.

Automatische Dispensiervorrichtungen lösen die Probleme der manuellen Reagenzienzugabe. Sie ermöglichen ein rasches und genaues Aufbringen unterschiedlicher Volumina in ein Probengefäß. Für die in-vitro Diagnostik kommen oft Systeme in Anwendung, die ein kontaktfreies und hochpräzises Dispensieren von Volumina im Mikro- bis Nanoliter-Bereich ermöglichen.

US 2010/0221704 A1, US 2003/0132112 A1 und US 6,589,790 B1 offenbaren jeweils ein Verfahren zum Einbringen von Lösungen in mikrofluidische Vorrichtungen. Herkömmliche Dispensiersysteme für mehrere Reagenzien verwenden jedoch teure und komplizierte Komponenten, die für Point-of-Care Systeme ungeeignet sind.

Bei herkömmlichen automatischen Dispensiersystemen mit nur einer Düse mit einer Auslassöffnung und mehreren Ventilen (auch Mehrkanal) zum Durchlass des benötigten Reagens bleiben Totvolumina im Flüssigkeitspfad, in dem sich die Reagenzien vermischen. Hier muss nach jedem Reagens vollständig gespült werden und die Spülflüssigkeit in einem separaten Behältnis aufgefangen werden. Eine Anordnung eines eigenen Flüssigkeitskreislaufs zum Spülen der Düsen ist in einem Point-of-Care System allerdings nachteilig.

Dürfen die zu dispensierenden Flüssigkeiten zudem vor dem Dispensieren nicht in Kontakt kommen, da sonst biochemische Reaktionen im Fluidiksystem anstatt in der Messkammer stattfinden können, müssen separate Fluidikpfade angeordnet werden. Für solche Systeme ist es insbesondere wichtig, dafür Sorge zu tragen, dass sich vor dem Dispensieren keine Luft im Fluidikpfad befindet, die die dispensierte Menge an Reagenz beeinflussen könnte.

Aufgabe der vorliegenden Erfindung ist es daher sicherzustellen, dass der Fluidikpfad vor dem Start des eigentlichen Messvorgangs, vollständig bis zur Auslassöffnung mit Reagenz befüllt ist.

Die Aufgabe der Erfindung wird jeweils eigenständig durch ein Verfahren gemäß Anspruch 1 zur Befüllung einer mikrofluidischen Vorrichtung, insbesondere von Düsen eines Dispensiersystems eines Testsystems umfassend ein Dispensiersystem und eine mikrofluidische Vorrichtung, und ein Testsystem gemäß Anspruch 9, umfassend zumindest ein Dispensiersystem, eine mikrofluidische Vorrichtung und zumindest einen fotosensitiven Sensor mit einer Mehrzahl von Fotodetektoren gelöst.

Vorteilhaft dabei erweist sich, dass sichergestellt werden kann, dass sich eine Lösung in der Düse befindet und somit das richtige Volumen der Lösung für nachfolgende Verfahrensschritte aus dieser Düse abgegeben werden können, ohne die Düse nochmals befüllen, spülen, waschen, etc. zu müssen.

In einer Weiterbildung umfasst das Dispensiersystem zumindest zwei Behältnisse mit Lösungen, wobei im ersten Behältnis eine erste Lösung, insbesondere Chemilumineszenzlösung, und im zweiten Behältnis eine weitere Lösung, vorzugsweise Enzymlösung, enthalten ist, und die Behältnisse über eine Fluidleitung mit zumindest einer Mikropumpe verbunden sind, und anschließend zumindest zwei Düsen angeordnet sind, wobei eine erste Düse zum Aufbringen der ersten Lösung, insbesondere Chemilumineszenzlösung, und die zweite Düse zum Aufbringen der weiteren Lösung, vorzugsweise Enzymlösung, in die Probenaufbringöffnung der mikrofluidischen Vorrichtung ist, umfassend zumindest die Schritte:
- transportieren der ersten Lösung, insbesondere Chemilumineszenzlösung, und der weiteren Lösung, insbesondere Enzymlösung, vom jeweiligen Behältnis über die jeweilige Düse des Dispensiersystems zur Probenaufbringöffnung der mikrofluidischen Vorrichtung mittels der zumindest einen Mikropumpe,
- Messung eines Lichtsignals, insbesondere Chemilumineszenzsignals, durch Reaktion der ersten Lösung, insbesondere Chemilumineszenzlösung, und der weiteren Lösung, insbesondere Enzymlösung, im Messbereich der mikrofluidischen Vorrichtung mit zumindest einem fotosensitiven Sensor mit einer Mehrzahl von Fotodetektoren, und
- Abschalten der zumindest einen Mikropumpe bei Detektion des Lichtsignals, insbesondere Chemilumineszenzsignals.

Ist ein Lichtsignal im mikrofluidischen Kanal detektierbar, reagierten also die erste Lösung, insbesondere Chemilumineszenzlösung, und die weitere Lösung, vorzugsweise Enzymlösung, miteinander, weil das Signal erst durch Reaktion der beiden Reagenzien miteinander gebildet wird. Da ein Aufeinandertreffen und somit eine Reaktion der beiden Lösungen erst nach Abgabe aus den jeweiligen Düsen möglich ist, müssen also sowohl die erste Lösung, insbesondere Chemilumineszenzlösung, als auch die weitere Lösung, vorzugsweise Enzymlösung, die Düsen passiert haben. Durch die Detektion des Lichtsignals, welches aus der schemischen bzw. biochemischen Reaktion der beiden Reagenzien gebildet wird, ist sichergestellt, dass also sowohl die erste Lösung, insbesondere Chemilumineszenzlösung, als auch die weitere Lösung, vorzugsweise Enzymlösung, in den Messbereich des mikrofluidischen Kanals gelangt sind und daher auch in den Düsen des Dispensiersystems, welche die Flüssigkeiten zur mikrofluidischen Vorrichtung über die Probenaufbringöffnung transportieren, vorhanden sind. Dabei erweist sich von Vorteil, dass sichergestellt werden kann, dass sowohl die Düse für das Aufbringen der ersten Lösung, insbesondere Chemilumineszenzlösung, als auch die Düse für die weitere Lösung, vorzugsweise Enzymlösung, bis zum Auslassende mit der jeweiligen Flüssigkeit gefüllt sind, und somit beim Dispensieren das jeweils richtige Volumen, das über die Dispensierzeit eingestellt wird, abgegeben wird. Für die Durchführung diverser Analysen mit dem Testsystem ist es wichtig, dass vor der Messung sichergestellt ist, dass der Flüssigkeitsmeniskus in der Dispensiervorrichtung am Ende der Einspritzdüsen steht. Würde der Meniskus der ersten Lösung, insbesondere Chemilumineszenzlösung, bzw. der weiteren Lösung, vorzugsweise Enzymlösung, weiter hinten im Flüssigkeitskanal der Düse stehen, fehlt die entsprechende Menge der jeweiligen Lösung im Messverlauf und es kommt zu Falschergebnissen bei der Analyse mit dem Testsystem aufgrund zu gering dispensierter Flüssigkeitsvolumina. Vorteilhaft ist auch, dass hiermit ferner ein kostengünstiges System mit hoher Reproduzierbarkeit zur Verfügung steht. Auch der aus dem Stand der Technik bekannte Nachteil der Verwendung eines zusätzlichen Behältnisses für die Spüllösung des Fluidikpfades entfällt beim erfindungsgemäßen Verfahren und dem erfindungsgemäßen Testsystem. Zur Bestimmung der Befüllung der Düsen bis zum Ende der Auslassöffnung werden auch keine zusätzlichen Sensoren benötigt, die eine kompakte Bauweise eines Point-of-Care Systems verhindern würden.

Gemäß einer Weiterbildung ist vorgesehen, dass
(a) die erste Lösung, insbesondere Chemilumineszenzlösung, über die erste Düse zur Probenaufbringöffnung der mikrofluidischen Vorrichtung mittels der zumindest einen Mikropumpe transportiert wird und in weiterer Folge in den Messbereich der mikrofluidischen Vorrichtung gesaugt wird,
(b) eine Messung des Lichtsignals im Messbereich der mikrofluidischen Vorrichtung mit zumindest einem fotosensitiven Sensor mit einer Mehrzahl von Fotodetektoren erfolgt,
(c) die Mikropumpe bei Änderung des Lichtsignals, insbesondere bei Erhöhung durch den optofluidischen Linseneffekt, abgeschaltet wird,
(d) die weitere Lösung, insbesondere Enzymlösung, über die weitere Düse zur Probenaufbringöffnung der mikrofluidischen Vorrichtung mittels Mikropumpe transportiert wird und in weiterer Folge in den Messbereich der mikrofluidischen Vorrichtung gesaugt wird,
(e) das Lichtsignal, insbesondere Chemilumineszenzsignals, im Messbereich der mikrofluidischen Vorrichtung mit dem fotosensitiven Sensor mit einer Mehrzahl von Fotodetektoren detektiert wird,
(f) die Mikropumpe bei Detektion des Lichtsignals, insbesondere Chemilumineszenzsignals, abgeschaltet wird.

Ein sequentielles Aufbringen der Lösungen hat den Vorteil, dass das Vorhandensein der ersten Lösung, insbesondere Chemilumineszenzlösung, unabhängig von der weiteren Lösung, vorzugsweise Enzymlösung, kontrolliert werden kann. Somit kann bei fehlendem Lichtsignal, insbesondere Chemilumineszenzsignal, rasch die Fehlerquelle gefunden werden, ob entweder keine bzw. zu wenig erste Lösung, insbesondere Chemilumineszenzlösung, oder keine oder zu wenig weitere Lösung, vorzugsweise Enzymlösung, über die Düse in die Probenaufbringöffnung abgegeben wurde.

Sobald die erste Lösung in den mikrofluidischen Kanal transportiert wird, wird das Lichtsignal durch einen optofluidischen Linseneffekt geändert, insbesondere erhöht, wodurch die Meniskusmessung der ersten Lösung ermöglicht wird.

Nach einer Weiterbildung werden weitere Schritte durchgeführt, wobei
(g) eine zusätzliche Lösung, insbesondere Waschlösung, über eine weitere Düse zur Probenaufbringöffnung der mikrofluidischen Vorrichtung mittels Mikropumpe transportiert wird und in weiterer Folge in den Messbereich der mikrofluidischen Vorrichtung gesaugt wird,
(h) die Verschiebung des zuvor gemessenen Lichtsignals, insbesondere Chemilumineszenzsignals, im Messbereich der mikrofluidischen Vorrichtung mit zumindest einem fotosensitiven Sensor mit einer Mehrzahl von Fotodetektoren gemessen wird,
(i) die Mikropumpe bei Detektion der Lichtsignalverschiebung abgeschaltet wird.

Dadurch wird erreicht, dass auch das Befüllen der Düse mit der zusätzlichen Lösung, insbesondere Waschlösung, vor dem Dispensieren der zusätzlichen Lösung während der tatsächlichen Analyse im Testsystem sichergestellt werden kann.

Ein Kontakt der Lösungen, insbesondere der Enzymlösung, mit Luft kann zum Verstopfen der Auslassöffnung der Düse führen. Die Auslassöffnungen der Düsen können allerdings auch austrocknen, wodurch sich der Flüssigkeitsmeniskus darin zurückzieht und ein falsches Probenvolumen bei der nachfolgenden Analyse abgegeben wird. Daher werden vorteilhafterweise die Auslassöffnungen der Düsen nach Abschalten der Mikropumpe durch zumindest eine Abdichtvorrichtung, insbesondere luftdicht, verschlossen.

Die Kombination der Mikropumpe mit der Düse hat den Vorteil, dass ein Strahl aus Nanolitertropfen der jeweiligen Flüssigkeit erzeugt wird, wodurch eine zielgerichtete und kontaktlose Abgabe der jeweiligen Lösung aus der Auslassöffnung der Düse auf die Probenaufbringöffnung der mikrofluidischen Vorrichtung ermöglicht wird. Die zielgerichtete Abgabe ist erforderlich um sicherzustellen, dass das gesamte Volumen der jeweiligen Lösung auch tatsächlich auf die Probenaufbringöffnung der mikrofluidischen Vorrichtung aufgebracht wird, um eine korrektes Analyseergebnis zu erhalten. Durch die Mikropumpe wird das Dispensieren von wenigen Mikrolitern in die Probenaufbringöffnung der mikrofluidischen Vorrichtung mit + 1 µl Genauigkeit erreicht.

Nach dem Befüllen der Düsen des Dispensiersystems wird eine biologische Probe in die Probenaufbringöffnung gegeben und in den mikrofluidischen Kanal transportiert, wo Zielmoleküle der biologischen Probe über spezifische Bindungsstellen mit Molekülen reagieren, die in Testabschnitten des Messbereichs angeordnet sind, und durch Zugabe der Lösungen aus dem Dispensiersystem eine chemische bzw. biochemische Reaktion unter Lichtabgabe stattfindet, und ein Lichtsignal gebildet wird, das durch den fotosensitiven Sensor mit einer Mehrzahl von Fotodetektoren detektiert wird, wodurch eine rasche Auswertung der biologischen Probe erfolgen kann, weil mehrere Proben nacheinander gemessen werden können ohne zwischendurch spülen zu müssen.

Ferner kann in einer Weiterbildung das Dispensiersystem zumindest zwei Behältnisse mit Lösungen umfassen, wobei im ersten Behältnis eine erste Lösung, insbesondere Chemilumineszenzlösung, und im zweiten Behältnis eine weitere Lösung, vorzugsweise Enzymlösung, enthalten ist, und die Behältnisse über eine Fluidleitung mit zumindest einer Mikropumpe verbunden sind, und anschließend zumindest zwei Düsen angeordnet sind, wobei eine erste Düse zum Aufbringen der ersten Lösung, insbesondere Chemilumineszenzlösung, und die zweite Düse zum Aufbringen der weiteren Lösung, vorzugsweise Enzymlösung, in die Probenaufbringöffnung der mikrofluidischen Vorrichtung ist, wodurch ein rasches Priming des Testsystems möglich ist.

In einer Weiterbildung ist vorgesehen, dass die Behältnisse eine Schnittstelle mit einem Port zur Verbindung an einen Standard Luer Konus der Fluidleitung aufweisen, um eine trennbare Verbindung der Behältnisse über die Fluidleitung mit der Mikropumpe herzustellen. Dadurch kann ein lufteinschlussfreies Andocken der Behältnisse erzielt werden. Von Vorteil ist zudem, dass leere Behältnisse, sobald eine darin befindliche Lösung aufgebraucht ist, einfach gegen gefüllte Behältnisse getauscht werden können ohne Luft in den Fluidikpfad des Dispensiersystems einzubringen.

Sind die Behältnisse, die ein Reservoir für die jeweilige Lösung bilden, als selbstkollabierende Beutel ausgebildet, wird ebenfalls ein Einbringen von Luftbläschen in das Dispensiersystem, insbesondere in die Düsen, vermieden. Somit ist auch eine Entlüftung des Behältnisses obsolet.

Nach einer Weiterbildung ist in der Fluidleitung zwischen Behältnis und Mikropumpe zumindest ein Rückflussventil, insbesondere mit Vorspannung, angeordnet. Das Rückflussventil sperrt den Flüssigkeitsrückfluss zum Reservoir des Behältnisses. Durch die Vorspannung wird ein eventuell vorliegender Überdruck im Reservoir des Behältnisses abgefedert und dadurch das etwaige Nachtropfen von Flüssigkeit aus der Austrittsöffnung der Düse in die Probenaufbringöffnung der mikrofluidischen Vorrichtung verhindert.

Ferner ist vorgesehen, dass zumindest eine Abdichtvorrichtung im Bereich einer Austrittsöffnung der Düsen angeordnet ist, wodurch ein Verschließen der Auslassöffnung der Düsen möglich ist und somit sowohl ein Zurückziehen des Flüssigkeitsmeniskus als auch ein Verstopfen der Auslassöffnung der Düsen vermieden werden. Insbesondere zwischen den Messungen können die Düsen luftdicht verschlossen werden und damit Verstopfungen in den Düsen verhindert werden.

Das Dispensiersystem umfasst zumindest zwei Dispensiereinheiten, wobei in der ersten Dispensiereinheit ein Behältnis mit einer ersten Lösung, insbesondere Chemilumineszenzlösung, angeordnet ist, das über eine Fluidleitung mit zumindest einer Mikropumpe und anschließend einer Düse verbunden ist, und in der zweiten Dispensiereinheit ein Behältnis mit einer weiteren Lösung, insbesondere Enzymlösung, angeordnet ist, das ebenfalls über eine Fluidleitung mit zumindest einer Mikropumpe und anschließend einer Düse verbunden ist und gegebenenfalls in der dritten Dispensiereinheit ein Behältnis mit einer zusätzlichen Lösung, insbesondere Waschlösung, angeordnet ist, das ebenfalls über eine Fluidleitung mit zumindest einer Mikropumpe und anschließend einer Düse verbunden ist. Die parallele Anordnung zumindest zweier Dispensiereinheiten erweist sich von Vorteil, weil somit völlig separate Fluidikpfade im Dispensiersystem vorliegen, die erst bei Übergang auf die mikrofluidische Vorrichtung miteinander in Kontakt kommen können und somit eine vorzeitige Reaktion oder Kontamination einer Lösung mit einer anderen verhindert werden kann.

In jeder Dispensiereinheit kann am Behältnis eine Schnittstelle mit einem Port zur Verbindung an einen Standard Luer Konus und in der Fluidleitung zwischen Behältnis und Mikropumpe zumindest ein Rückflussventil, insbesondere mit Vorspannung, angeordnet sein, wodurch einerseits einfacher Wechsel der Behältnisse vom restlichen Testsystem, insbesondere Dispensiersystem möglich ist und andererseits ein Überdruck der Behältnisses abgefangen werden kann um ein Nachtropfen auf die Probenaufbringöffnung der mikrofluidischen Vorrichtung zu verhindern und auch ein Rückfluss der Lösung in das Behältnis verhindert wird.

Die Düsen benachbarter Dispensiereinheiten sind vorzugsweise derart angeordnet, dass sie in dieselbe Probenaufbringöffnung der mikrofluidischen Vorrichtung Nanolitertropen der Lösungen einbringen. Von Vorteil dabei erweist sich, dass zusätzliche Vorrichtungen oder Maßnahmen, die den Flüssigkeitsstrahl zur Probenaufbringöffnung lenken, obsolet sind.

Von Vorteil erweist sich ein Auslassende einer Düse in einem Abstand von 0,1 mm bis 80 mm von der Probenaufbringöffnung der mikrofluidischen Vorrichtung anzuordnen, wodurch eine Distanz zwischen Dispensiervorrichtung und mikrofluidische Vorrichtung überwunden wird, die ein kontaktloses Aufbringen der jeweiligen Lösung in die Probenaufbringöffnung der mikrofluidischen Vorrichtung ermöglicht. Dadurch wird vermieden, dass die Lösungen unterschiedlicher Dispensiereinheiten bzw. Düsen sich gegenseitig kontaminieren.

Zum besseren Verständnis der Erfindung wird diese anhand der nachfolgenden Figuren näher erläutert.

Es zeigen jeweils in stark schematisch vereinfachter Darstellung:
- Fig. 1: eine schematische Darstellung des Testsystems;
- Fig. 2: eine Darstellung der Signalverstärkung durch den optofluidischen Effekt;
- Fig. 3: eine Darstellung des Chemilumineszenzsignals im Messbereich des mikrofluidischen Kanals;
- Fig. 4: eine Darstellung der Verschiebung des Chemilumineszenzsignals im Messbereich des mikrofluidischen Kanals.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die vorliegende Erfindung beschreibt ein Verfahren zur Vorbereitung eines Testsystems zur Anwendung in der in-vitro-Diagnostik, insbesondere im Point-of-Care (POC) Bereich, sowie das Testsystem.

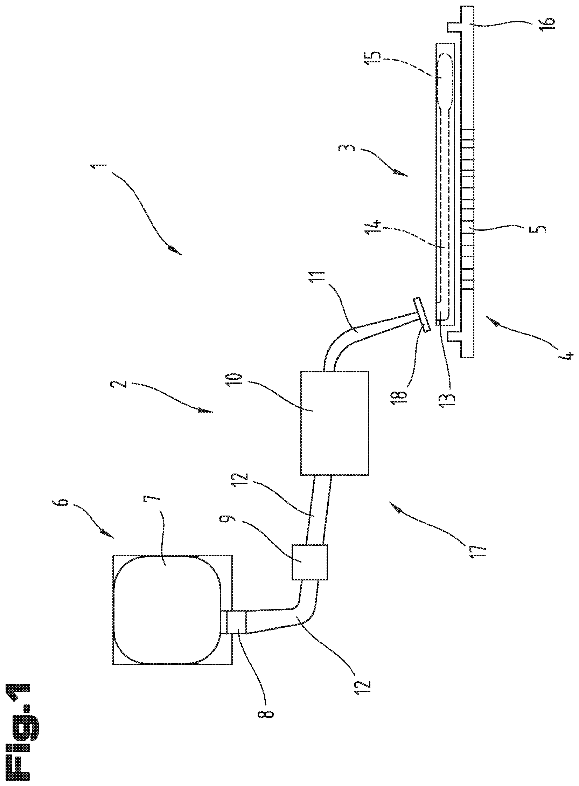

Fig. 1 zeigt eine schematische Schnittdarstellung des erfindungsgemäßen Testsystems 1, das zumindest ein Dispensiersystem 2, eine mikrofluidische Vorrichtung 3 und einen fotosensitiven Sensor 4 mit einer Mehrzahl von Fotodetektoren 5 umfasst. Über Steuerungsmodule wird das Testsystem 1 gesteuert.

Ferner werden ein Behältnis 6 mit einem Beutel 7, eine Schnittstelle 8, ein Rückflussventil 9, eine Mikropumpe 10 und eine Düse 11 des Dispensiersystems 2 gezeigt, die über eine Fluidleitung 12 miteinander verbunden sind.

Die mikrofluidische Vorrichtung 3 umfasst neben der Probenaufbringöffnung 13 einen mikrofluidischen Kanal 14 mit dem Messbereich mit mehreren Testabschnitten und gegebenenfalls ein Reservoir 15. Die mikrofluidische Vorrichtung 3 wird von einer Aufnahmevorrichtung 16 gehalten, auf bzw. in welcher der fotosensitive Sensor 4 angeordnet ist.

Durch die Reaktion des in der mikrofluidischen Vorrichtung 3 transportierten Probenmaterials mit den Reagenzien aus dem Dispensiersystem 2 bzw. durch die Reagenzien des Dispensiersystems 2 selbst kommt es in den Testabschnitten zu einer Änderung der optischen Eigenschaft bzw. zu einer auf einer chemischen bzw. biochemischen Reaktion basierenden Lichtabgabe, sodass die, dem jeweiligen Testabschnitt zugeordneten Fotodetektoren 5, eine Änderung der einfallenden Lichtintensität erfassen.

Die Lichtabgabe bzw. Änderung des Lichtsignals kann wie bei Chemilumineszenz oder Farbumschlag beispielsweise auf einer chemischen bzw. biochemischen Reaktion basieren, aber auch, wie etwa bei Fluoreszenz oder Phosphoreszenz, auf Zufuhr von Anregungsenergie aus anderen Quellen basieren. Vorzugsweise wird ein Chemilumineszenzsignal erfasst.

In einer möglichen Ausführungsvariante wird das Dispensiersystem 2 von einem Behältnis 6 mit einem Reservoir für eine Lösung gebildet. Eine Fluidleitung 12 verbindet das Behältnis 6 mit der Mikropumpe 10 und in weiterer Folge mit der Düse 11.

Das Dispensiersystem 2 wird vorzugsweise aus zumindest zwei Behältnissen 6, die über jeweils eine Fluidleitung 12 mit einer Mikropumpe 10 verbunden sind, und zumindest zwei Düsen 11 gebildet. Das Dispensiersystem 2 kann auch aus mehreren Dispensiereinheiten 17 gebildet sein, wobei eine Dispensiereinheit 17 zumindest ein Behältnis 6, eine Fluidleitung 12, eine Mikropumpe 10 und eine Düse 11 umfasst. Die Düse 11 einer Dispensiereinheit 17 kann durch eine Abdichtvorrichtung 18 verschlossen werden.

Die Behältnisse 6 dienen als Reservoir für die unterschiedlichen Lösungen. Sie sind in einer möglichen Ausführungsform als selbstkollabierende Beutel 7 ausgebildet, wie sie aus der Infusionsmedizin bekannt sind, wodurch keine Luftbläschen in den Fluidikpfad des Dispensiersystems 2 gelangen. Vorzugsweise ist in einem Beutel 7 die Chemilumineszenzlösung, in einem weiteren Beutel 7 die Enzymlösung und in einem zusätzlichen Beutel 7 die Waschlösung enthalten. In den Behältnissen 6 können sich allerdings auch andere Lösungen befinden, die beispielsweise für eine Farbreaktion erforderlich sind.

Der selbstkollabierende Beutel 7 und die Fluidleitung 12, die als Schlauchsystem ausgebildet ist, sind an einer Schnittstelle 8 miteinander verbunden. Die Schnittstelle 8 wird dabei von einer Luer-Verbindung gebildet. Die selbstkollabierenden Beutel 7 weisen an ihrem unteren Ende einen Luer-Konus auf, welcher eine flüssigkeits- und luftdichte Verbindung mit der Fluidleitung 12, herstellt. Die Dichtung wird hierbei durch die kegelförmige Konstruktion der Verbindungsteile, des sogenannten Luer-Konus, erreicht. Das Behältnis 6 mit dem Reservoir kann durch die Luer-Verbindung ohne Lufteinschluss einfach gewechselt werden.

Mehrere dieser Beutel 7 können in einem Gehäuse zusammengefasst werden und eine eigene Baueinheit bilden. Diese Baueinheit kann über die Schnittstelle 8 einfach vom restlichen Dispensiersystem 2 abgenommen werden, sobald beispielsweise eine bestimmte Anzahl von Analysen mit dem Testsystem 1 durchgeführt wurde und das Volumen der in den Beuteln 7 befindlichen Flüssigkeiten aufgebraucht ist. Wie oft eine solche Baueinheit verwendet wurde und somit wann sie zum Austauschen ist kann beispielsweise über eine RFID-System ausgewertet werden.

Die Mikropumpe 10 ermöglicht das Befördern von kleinsten Volumina. Sie umfasst Spritzgussteile für das Gehäuse und die Pumpkammer, ein Piezoaktor und Ventile. Derartige Mikropumpen 10 sind im Stand der Technik beispielsweise von der Fa. Bartels-Mikrotechnik bekannt bzw. in der WO2009/059664 A1 beschrieben.

Der Fluidikpfad der Lösungen beginnt im jeweiligen Flüssigkeitsreservoir im Behältnis 6 und erstreckt sich über die Fluidleitung 12 zur Mikropumpe 10 und endet in der jeweiligen Düse 11. Die Mikropumpe 10 formt in Kombination mit der Düse 11 einen Strahl aus Nanolitertropfen, wodurch das kontaktlose zielgerichtete Dispensieren von wenigen Mikrolitern in die Probenaufbringöffnung 13 der mikrofluidischen Vorrichtung 3 möglich ist. Die Nanolitertropfen sind Tröpfchen mit Volumina von 1 nl bis 100 nl, vorzugsweise 2 nl bis 10 nl, insbesondere 5 nl.

Die Düsen 11 weisen im Bereich der des Auslassendes bzw. der Auslassöffnung einen Durchmesser von weniger als 500 µm auf. Vorzugsweise beträgt der Durchmesser der Düse 11 in diesem Bereich zwischen 100 µm und 300 µm, insbesondere 250 µm.

In einer bevorzugten Ausführungsform ist zwischen Mikropumpe 10 und Behältnis 6 ein Rückflussventil 9 im Fluidikpfad angeordnet, das den Rückfluss der jeweiligen Lösung zum Reservoir des Behältnisses 6 sperrt. Zudem kann ein Rückflussventil 9 mit Vorspannung angeordnet sein, wobei durch die Vorspannung ein Überdruck des Reservoirs ausgeglichen wird und somit ein Nachtropfen von Flüssigkeit aus den Düsen 11 in die Probenaufbringöffnung 13 der mikrofluidischen Vorrichtung 3 verhindert wird.

In einer Weiterbildung der Erfindung kann zudem eine Abdichtvorrichtung 18, die die Düsen 11 zwischen den Messungen luftdicht verschließt und damit Verstopfungen in den Düsen 11 vermeidet im Bereich der Auslassöffnung der Düsen 11 angeordnet sein. Die Abdichtvorrichtung 18 kann dabei für jede Düse 11 separat bzw. nur für ausgewählte Düsen 11 vorhanden sein. In einer alternativen Ausführungsform kann die Abdichtvorrichtung 18 auch einstückig für mehrere Düsen 11 beispielsweise in Form eines Silikonpads ausgebildet sein.

Ein Beutel 7 mit einer Schnittstelle 8 zur Fluidleitung 12 mit Rückflussventil 9 mit Vorspannung und eine Mikropumpe 10 in Kombination mit einer Düse 11 bilden eine Dispensiereinheit 17 eines Dispensiersystems 2.

Mehrerer solcher Dispensiereinheiten 17 können parallel im Dispensiersystem 2 angeordnet sein. In einer bevorzugten Ausführungsvariante sind drei Dispensiereinheiten 17 nebeneinander angeordnet, wobei sich die Dispensiereinheiten 17 durch die Lösungen im Reservoir des Beutels 7 unterscheiden. In einem ersten Beutel 7 ist eine für die chemische bzw. biochemische Reaktion verantwortliche bzw. erforderliche Lösung, insbesondere Chemilumineszenzlösung, in einem zweiten Beutel 7 die weitere Lösung, vorzugsweise Enzymlösung, und in einem dritten Beutel 7 die zusätzliche Lösung, insbesondere Waschlösung enthalten. Um in dieselbe Probenaufbringöffnung 13 der mikrofluidischen Vorrichtung 3 zu treffen sind bei Verwendung von drei nebeneinander angeordneten Düsen 11 die beiden äußeren Düsen 11 in einem spitzen Winkel zur mittleren Düse 11 angeordnet.

In einer alternativen Ausführungsform kann das Dispensiersystem 2 auch nur eine Dispensiereinheit 17 umfassen, wobei diese aus mehreren Beuteln 7 mit jeweils einer Fluidleitung 12 besteht, die in einer Mikropumpe 10 mit mehreren Kammern für die unterschiedlichen Lösungen zusammengeführt werden, und von dort die jeweilige Lösung in voneinander getrennten Düsen 11 abtransportiert wird.

Um die zielgerichtete Abgabe der jeweiligen Lösung in die Probenaufbringöffnung 13 der mikrofluidischen Vorrichtung 3 sicherzustellen ist die Auslassöffnung der Düse 11 in einem Abstand von 0,1 mm bis 80 mm zur Probenaufbringöffnung 13 angeordnet. Bevorzugt in einem Abstand von 1 mm bis 50 mm, und insbesondere in einem Abstand von 2 mm bis 20 mm.

Die mikrofluidische Vorrichtung 3 umfasst zumindest eine Probenaufbringöffnung 13, einen mikrofluidischen Kanal 14 sowie ein Reservoir 15. Der mikrofluidische Kanal 14 weist eine Länge von 30 mm bis 50 mm, eine Breite von 1 mm bis 4 mm und eine Höhe von 10 µm bis 200 µm auf, und kann durch Spritzgießen hergestellt werden. Bevorzugt ist eine Ausbildung des Kanals mit einer Länge von 40 mm, einer Breite von 2 mm und einer Höhe von 100 µm. Im mikrofluidischen Kanal 14 ist der Messbereich angeordnet, wo auch Moleküle immobilisiert sind, die spezifische Bindungsstellen für bestimmte Zielmoleküle einer biologischen Probe aufweisen. Aufgrund der geometrischen Charakteristik des mikrofluidischen Kanals 14, kommt es zu einer kapillaren Bewegung der Flüssigkeiten von der Probenaufbringöffnung 13 durch den mikrofluidischen Kanal 14 bis hin zum Reservoir 15. Nach Abgabe einer Probe an der Probenaufbringöffnung 13 im Kanal 14 bildet sich ein Druckgradient mit einer daraus resultierenden Kapillarkraft in Richtung des Reservoirs 15, wodurch gewährleistet ist, dass eine selbständige Durchleitung der Probe durch den Kanal bzw. die Mikrofluidik erfolgt, also dass insbesondere kein Mittel zur Erzeugung einer Druckdifferenz bzw. einer Strömungsbewegung erforderlich ist. Insbesondere handelt es sich dabei um eine sogenannte konvektionsgetriebene Hybridisierung, bei der sich im Kanal 14 Konvektionsgradienten ausbilden, die neben der Durchleitung der Probe durch den Kanal 14, auch noch eine Lenkung des Probenmaterials hin zu den Testabschnitten des Messbereichs gewährleisten (Squires TM et al., "Making it stick: convection, reaction and diffusion in surface-based biosensors", Nature Biotech, 26, 4, 2008). Bei Durchführung einer Analyse kommt es auch zu einem Kontakt des in der biologischen Probe befindlichen Analyten mit den im Messbereich immobilisierten Molekülen, wodurch es im jeweiligen Messbereich bei Vorhandensein eines entsprechenden Analyten in der Probe zu einer chemischen Bindungsreaktion kommt, was in weiterer Folge nach Zugabe entsprechender Reagenzien zu einer chemischen bzw. biochemischen Reaktion (z.B. Chemilumineszenz, Farbumschlag, etc.) mit Lichtemission führt.

Weitere Ausgestaltungsmöglichkeiten der mikrofluidischen Vorrichtung 3 um mehr Licht auf den fotosensitiven Sensor 4 zu bringen sind die dem fotosensitiven Sensor 4 gegenüberliegende Begrenzungsfläche des Kanals 14 optisch reflektierend auszubilden; einen konkaven Querschnitt im Kanal 14 auszubilden, der als Sammellinse dient; eine Lichtlenkstruktur in der mikrofluidischen Vorrichtung 3 anzubringen; die mikrofluidische Vorrichtung 3 als Lichtleitfaserplatte auszubilden. Details zu den jeweiligen Ausgestaltungsmöglichkeiten der mikrofluidischen Vorrichtung 3 sind in der WO 2012/080339 enthalten. In einer alternativen Ausführungsform kann der mikrofluidischen Kanal 14 auch durch eine Pumpe, vorzugsweise Mikropumpe, gefüllt werden. Bei einer derartigen mikrofluidischen Vorrichtung 3 ist kein Reservoir erforderlich, das den kapillaren Effekt verursacht.

Die mikrofluidische Vorrichtung 3 ist in bzw. an einer Aufnahmevorrichtung 16 lösbar angeordnet, sodass die Lichtaustrittsseite der mikrofluidischen Vorrichtung 3 dem fotosensitiven Sensor 4 zugewandt ist. Der fotosensitive Sensor 4 ist in einem Grundkörper angeordnet, wobei die einzelnen Fotodetektoren 5 von einer transparenten Deckschicht abgedeckt sind. Im Messbereich der mikrofluidischen Vorrichtung 3 ist eine Mehrzahl von Testabschnitten angeordnet. Während der Analyse sind die Testabschnitte einem Volumen der Mikrofluidik zugewandt, wodurch es bei Abgabe einer zu analysierenden Probe in der Probenaufbringöffnung 13 zu einer kapillaren Bewegung des Analyten kommt. Dadurch kommt es auch zu einem Kontakt des Analyten mit den Testabschnitten im Messbereich.

Die mikrofluidische Vorrichtung 3 wird auf einer Aufnahmevorrichtung 16 im Gehäuse, in dem das Testsystem 1 zumindest teilweise enthalten ist, positioniert, die derart ausgebildet ist, dass die mikrofluidische Vorrichtung 3 in einen feststehenden Teil der Aufnahmevorrichtung 16 eingelegt wird und von einem zweiten, beweglichen und/oder klappbaren Teil der Aufnahmevorrichtung 16 fixiert gehalten wird. Auch ist möglich, dass ein einem Teil der Aufnahmevorrichtung 16 ein vorgespanntes Element angeordnet ist, welches beim Einlegen der mikrofluidischen Vorrichtung 3 komprimiert wird und so die mikrofluidische Vorrichtung 3 in der Aufnahmevorrichtung 16 fixiert. Die Aufnahmevorrichtung 16 kann auch ladenartig ausgebildet sein und durch Betätigen eines Elements die Lade aus dem Gehäuse ausgefahren werden, die mikrofluidische Vorrichtung 3 aufgelegt und fixiert werden und wieder eingefahren werden, wobei der fotosensitive Sensor 4 mit den Fotodetektoren 5 bereits im Ladenelement angeordnet sein kann.

Der fotosensitive Sensor 4 mit einer Mehrzahl von Fotodetektoren 5 ist derart angeordnet, dass, sofern die mikrofluidische Vorrichtung 3 in der Aufnahmevorrichtung 16 positioniert und gehalten wird, die Testabschnitte im Messbereich des mikrofluidischen Kanals 14 mit ihrer Lichtaustrittsseite über den Fotodetektoren 5 des fotosensitiven Sensors 4 zu liegen kommen. Die Aufnahmevorrichtung 16 kann dazu beispielsweise einen feststehenden und einen längsverschieblich beweglichen, federvorgespannten Halteteil aufweisen, sodass bei Einlegen der mikrofluidischen Vorrichtung 3 der bewegliche Teil in einer Längsrichtung bewegt werden kann, um das Einlegen der mikrofluidischen Vorrichtung 3 zu erleichtern und diese, nach zurückfedern in die Halteposition, entsprechend fixiert. Neben einer längsverschieblichen Ausbildung kann aber auch ein Klapp- bzw. Schnappmechanismus vorgesehen sein. Auch ist es möglich, dass zumindest in einem der Halteteile ein Druckmittel vorhanden ist, bspw. ein Gummi- oder Federelement, welches wie zuvor beschrieben die mikrofluidische Vorrichtung 3 nach dem Einlegen fixiert.

Das Testsystem 1 ist zumindest teilweise in einem Gehäuse angeordnet, wobei die Behältnisse 6 des Dispensiersystems 2, welche leicht zugänglich sein sollen, um sie austauschen zu können, auch außerhalb des Gehäuses angeordnet sein können. Das Gehäuse muss einen lichtdichten Abschluss der mikrofluidischen Vorrichtung 3 gegenüber der Umgebung gewährleisten. Im Gehäuse kann eine Zuführvorrichtung zum Aufbringen der Probe angeordnet sein, welche die Weiterleitung zur Probenaufbringöffnung 13 der mikrofluidische Vorrichtung 3 ermöglicht.

Die Aufnahmevorrichtung 16 ist ladenartig ausgebildet, und transportiert die mikrofluidische Vorrichtung 3 für das Priming ins Gehäuse. Auch der fotosensitive Sensor 4 mit der Mehrzahl an Fotodetektoren 5 kann im Ladenelement enthalten sein. Ein Dichtelement schließt die mikrofluidische Vorrichtung 3 und den fotosensitiven Sensor 4 gegenüber der Umgebung lichtdicht ab. Das Dichtelement kann beispielsweise durch eine Nut-Feder-Verbindung ausgebildet sein. Das Dichtelement kann aber auch durch ein elastisch verformbares Element gebildet sein, beispielsweise ein Schaummaterial oder eine Gummidichtung, wobei bei Schließen des Ladenelements aufgrund einer dadurch hervorgerufenen Kompression des Dichtelements ein lichtdichter Abschluss des Innenraums des Messgeräts gegenüber der Umgebung gegeben ist. Um eine biologische Probe nach dem Priming zur Probenaufbringöffnung 13 der mikrofluidischen Vorrichtung 3 zu bringen, wird das Ladenelement wieder ausgefahren.

Somit kann die mikrofluidische Vorrichtung 3 in die Aufnahmevorrichtung 16 eingelegt werden und anschließend das Ladenelement geschlossen werden, ohne dass sich in der Mikrofluidik bereits Probenmaterial bzw. Probenchemie befindet, wodurch sichergestellt ist, dass keine chemische Reaktion in den Testabschnitten des Messbereichs ausgelöst wird. Erst dann, bei geschlossenem Ladenelement und sicherer Herstellung eines lichtdichten Abschlusses der mikrofluidischen Vorrichtung 3, erfolgt das Priming und werden die dafür erforderlichen Messungen durchgeführt. Anschließend an das Priming erfolgt das Aufbringen der biologischen Probe, wobei hierzu das Ladenelement vorerst geöffnet wird und nachfolgend für die zumindest eine erforderliche Messung mit dem fotosensitiven Sensor 4 mit einer Mehrzahl von Fotodetektoren 5 das Ladenelement wieder lichtdicht geschlossen wird.

Im Gehäuse kann auch eine Beleuchtungsvorrichtung, z. B. LEDs, vorhanden sein. Mögliche weitere Ausführungen zur Aufnahmevorrichtung 16, zur Beleuchtungsvorrichtung, sowie zur Ausführung der Messanordnung mit dem fotosensitiven Sensor 4 mit der Mehrzahl von Fotodetektoren 5 sind in der WO 2012/080339 beschrieben und gehören zur Offenbarung gegenständlicher Erfindung.

Um mögliche Fehlerquellen durch manuelle Tätigkeiten und Personalkosten und somit die Gesamtkosten für eine Analyse so gering wie möglich zu halten soll das Verfahren, welches mit dem Testsystem durchgeführt wird, soweit wie möglich automatisiert werden. Nach manueller Zugabe des Probenmaterials, also der zu analysierenden biologischen Probe, werden die für die Analyse erforderlichen Lösungen in die Probenaufbringöffnung 13 der mikrofluidischen Vorrichtung 3 eingebracht. Dies ist jedoch dahingehend problematisch, da einerseits die abzugebenden Volumina möglichst genau einzuhalten sind bzw. die Reihenfolge der Abgabe jener in der Analyse zu verwendenden Lösungen genau vordefiniert ist.

Mit dem erfindungsgemäßen Verfahren wird die Analyse soweit automatisiert, dass lediglich die zu analysierende Probe manuell aufgebracht werden muss.

Mit dem erfindungsgemäßen Verfahren zum Priming des Testsystems 1 werden Änderungen im Lichtsignal und/oder die Lichtemission chemischer bzw. biochemischer Reaktionen gemessen, und deren Ergebnisse als Parameter für die Steuerung zur Befüllung des Dispensiersystems 2 verwendet.

Die für die jeweilige Analyse erforderliche mikrofluidische Vorrichtung 3 wird in das Testsystem 1, insbesondere auf die Aufnahmevorrichtung 16 hierfür, eingelegt. Anschließend muss das Dispensiersystem 2 entsprechend vorbereitet werden, um die für die Analyse benötigten Reagenzien mit dem korrekten Volumen, luftblasenfrei und in der richtigen Reihenfolge abzugeben. Hierzu kann über eine Steuereinheit die Vorbereitung bzw. das Priming gestartet werden. Alternativ kann auch automatisch, sobald vom Testsystem 1 erkannt wird, dass eine mikrofluidische Vorrichtung 3 im Testsystem 1 angeordnet ist und auch lichtdicht abgeschlossen ist, die Vorbereitung gestartet werden.

In der einfachsten Ausführungsform wird eine Lösung vom Behältnis 6 über die Düse 11 des Dispensiersystems 2 zur Probenaufbringöffnung 13 der mikrofluidischen Vorrichtung 3 mittels Mikropumpe 10 transportiert und sodann in den Messbereich des mikrofluidischen Kanals 14 der mikrofluidischen Vorrichtung 3 weitertransportiert. Im Messbereich der mikrofluidischen Vorrichtung 3 erfolgt eine Messung eines Lichtsignals mit zumindest einem fotosensitiven Sensor 4 mit einer Mehrzahl von Fotodetektoren 5, wobei Änderungen im Lichtsignal und/oder die Lichtemission chemischer bzw. biochemischer Reaktionen gemessen werden. Sobald ein Lichtsignal oder eine Änderung des Lichtsignals detektiert wird, wird die Mikropumpe 10 abgeschaltet.

Für die Vorbereitung bzw. das Priming des Testsystems wird durch Starten der Mikropumpe 10 aus dem ersten Behältnis 6 eine erste Lösung, mit welcher durch eine chemische bzw. biochemische Reaktion mit einer weiteren Lösung eine Lichtemission möglich ist, über den Fluidikpfad, der zumindest eine Schlauchleitung, eine Mikropumpe 10 und eine Düse 11 umfasst, zur Probenaufbringöffnung 13 der mikrofluidischen Vorrichtung 3 transportiert. Gleichzeitig oder anschließend wird aus dem zweiten Behältnis 6 die weitere Lösung, vorzugsweise Enzymlösung, über einen weiteren Fluidikpfad ebenfalls zur Probenaufbringöffnung 13 transportiert. Dort kommt es zur Reaktion der ersten Lösung, insbesondere Chemilumineszenzlösung, mit der weiteren Lösung, vorzugsweise Enzymlösung, und ein Lichtsignal, insbesondere Chemilumineszenzsignal, wird erzeugt, das, sobald sich die Flüssigkeit im Messbereich des mikrofluidischen Kanals 14 befindet, detektiert werden kann. Somit ist sichergestellt, dass sich sowohl die erste Lösung, insbesondere Chemilumineszenzlösung, als auch die weitere Lösung, vorzugsweise Enzymlösung, in den Düsen 11 des Dispensiersystems 2 befinden und diese somit für die nachfolgende Analyse gefüllt und bereit sind.

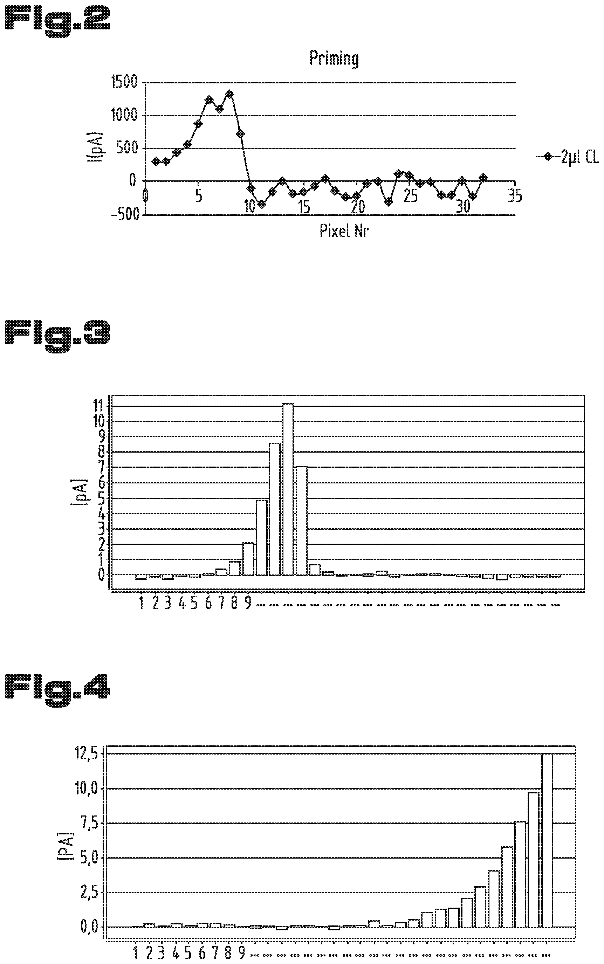

In einer alternativen Ausführungsform kann für die Vorbereitung bzw. das Priming des Testsystems 1 aus dem ersten Beutel 7 die erste Lösung, insbesondere Chemilumineszenzlösung, über die Fluidleitung 12 über das Rückflussventil 9 durch die Mikropumpe 10 zur ersten Düse 11 transportiert und von dort in Form von Nanolitertropfen in die Probenaufbringöffnung 13 der mikrofluidischen Vorrichtung 3 abgegeben um von dort durch die Kapillarwirkung über den Messbereich zum Reservoir 15 transportiert zu werden. Hierzu wird zuerst die Mikropumpe 10 gestartet und im Messbereich des mikrofluidischen Kanals 14 eine Messung durchgeführt. Sobald sich bei der Messung eine Änderung des Signals ergibt bzw. ein vordefinierter Grenzwert überschritten wird, was bereits bei Vorliegen eines Flüssigkeitsmeniskus erfolgt, ist eine Lösung im mikrofluidischen Kanal 14 vorhanden und die Mikropumpe 10 wird gestoppt, weil sich die erste Lösung, insbesondere Chemilumineszenzlösung, in der Auslassöffnung der ersten Düse 11 befindet. Zur Messung der Änderung des Lichtsignals kann im Testsystem 1 eine Lichtquelle, insbesondere LEDs, angeordnet sein. Vorzugsweise ist die erste Lösung transparent. Durch die Form des mikrofluidischen Kanals 14 und den Brechungsindex der Flüssigkeit wird das Lichtsignal, das von einer Lichtquelle abgeben wird, wenn transparente Flüssigkeit im mikrofluidischen Kanal 14 ist, durch den optofluidischen Linseneffekt auf dem Fotodetektor 5 verstärkt. Durch die erfindungsgemäße Ausbildung des Testsystems 1 wird die Signalstärke durch den Linseneffekt, ausgelöst durch das Durchfließen der ersten Lösung, im mikrofluidischen Kanal 14 erhöht. Diese Signalverstärkung ist gut erkennbar und daher einfach detektierbar wie in Fig. 2 dargestellt, wobei I(AU) die Änderung der Intensität des Lichtsignals ist.

Anschließend wird die zweite Mikropumpe 10 gestartet um die weitere Lösung, vorzugsweise Enzymlösung, vom zweiten Beutel 7 über die Fluidleitung 12 , das Rückflussventil 9 und die Mikropumpe 10 zur zweiten Düse 11 zu transportieren und von dort in Form von Nanolitertropfen in die Probenaufbringöffnung 13 der mikrofluidischen Vorrichtung 2 abzugeben. Durch die Kapillarwirkung wird die Lösung ebenfalls in den Messbereich der mikrofluidischen Vorrichtung 3 gezogen. Da bereits die erste Lösung, insbesondere Chemilumineszenzlösung, vorliegt kommt es zur chemischen bzw. biochemischen Reaktion der beiden Lösungen unter Lichtemission und es entsteht ein Lichtsignal, insbesondere Chemilumineszenzsignal, das im Messbereich gemessen wird. Sobald das Lichtsignal detektiert wird, wird die Mikropumpe 10 gestoppt, weil die weitere Lösung, vorzugsweise Enzymlösung, bis zur Auslassöffnung der zweiten Düse 11 steht.

In einer bevorzugten Ausführungsform wird nun der mikrofluidischen Kanal 14 noch gespült, um einerseits eine vorzeitige Reaktion der zu analysierenden Probe, die später aufgebracht wird, zu vermeiden und andererseits auch die Düse 11 mit der Waschlösung entsprechend vorzubereiten. Hierzu wird eine dritte Mikropumpe 10 gestartet und die zusätzliche Lösung, insbesondere Waschlösung, von einem dritten Beutel 7 mit Schnittstelle 8 zur Fluidleitung 12 über das Rückflussventil 9 und die Mikropumpe 10 zur dritten Düse 11 transportiert und von dort in Form von Nanolitertropfen auf die Probenaufbringöffnung 13 der mikrofluidischen Vorrichtung 3 abgegeben. Durch die Zugabe der zusätzlichen Lösung, insbesondere Waschlösung, kommt ein zusätzliches Flüssigkeitsvolumen in den mikrofluidischen Kanal 14 und das Lichtsignal, insbesondere Chemilumineszenzsignal, wird verschoben. Sobald diese Lichtsignalverschiebung, insbesondere Chemilumineszenzsignalverschiebung, detektiert wird, wird die dritte Mikropumpe 10 abgeschaltet, weil nun auch die zusätzliche Lösung, insbesondere Waschlösung, bis zum Auslassende der dritten Düse 11 steht.

Die Fig. 3 zeigt die typische Signalverteilung eines Chemilumineszenzsignals im Messbereich des mikrofluidischen Kanals 14 nach Reaktion der Chemilumineszenzlösung mit der Enzymlösung, wobei [pA] der y-Achse Fotostrom ist.

In Fig. 4 ist die Verschiebung des Chemilumineszenzsignals nach Zugabe der Waschlösung dargestellt.

Spätestens nach Befüllen der dritten Düse 11 bis zum Ende der Auslassöffnung können die Düsen 11 mittels Abdichtvorrichtung 18 verschlossen werden. Selbstverständlich können die Düsen 11 auch bereits nach Befüllen der jeweiligen Düse 11 gemeinsam oder einzeln verschlossen werden, wodurch Verstopfungen durch Austrocknen der Düsen 11 verhindert werden.

Die Düsen 11 sind nun für die nachfolgende Analyse vorbereitet und es können Volumina mit einer Genauigkeit von + 1 µl auf die mikrofluidische Vorrichtung 3 appliziert werden.

Wird das Testsystem 1, insbesondere das Dispensiersystem 2, für die Applikation von jeweils 10 µl bis 100 µl Volumina ausgelegt, sollen die Beutel 7 im Reservoir ein Fassungsvermögen für ca. 50 Tests aufweisen, also ca. 0,5 ml bis 5 ml.

Bei der Durchführung der nachfolgenden Analyse wird zuerst die zu analysierende Probe auf die mikrofluidische Vorrichtung 3 aufgebracht, wobei die Probe direkt in die Probenaufbringöffnung 13 oder über eine Zuführvorrichtung im Gehäuse pipettiert bzw. getropft werden kann. Daraufhin wird die biologische Probe in den mikrofluidischen Kanal 14 transportiert, wo Zielmoleküle der biologischen Probe über spezifische Bindungsstellen mit Molekülen reagieren, die in Testabschnitten des Messbereichs immobilisiert sind. Sodann wird automatisch die weitere Lösung, vorzugsweise Enzymlösung, beigegeben und somit in den mikrofluidischen Kanal 14 gezogen. Durch Zugabe der zusätzlichen Lösung, insbesondere Waschlösung, wird die überschüssige weitere Lösung, insbesondere Enzymlösung, entfernt um unspezifische Signale zu vermeiden. Zuletzt wird die erste Lösung, insbesondere Chemilumineszenzlösung, automatisch auf die mikrofluidische Vorrichtung 3 abgegeben, die in Reaktion mit den spezifisch in den Testabschnitten aus der Enzymlösung gebundenen Enzymen, ein Lichtsignal, insbesondere Chemilumineszenzsignal, erzeugt, welches vom fotosensitiven Sensor 4 mit einer Mehrzahl von Fotodetektoren 5 gemessen wird und durch Zuordnung auf den Testabschnitt im Messbereich festgestellt werden kann, welcher Analyt in der Probe enthalten ist. Wie bereits ausgeführt, können anstelle der Enzymlösung und der Chemilumineszenzlösung auch andere Lösungen verwendet werden, die miteinander einen Farbumschlag geben.

Die Messung des Lichtsignals, insbesondere Chemilumineszenzsignals, erfolgt vorzugsweise über den im Testsystem 1 angeordneten fotosensitiven Sensor 4 mit mehreren Fotodetektoren 5 und kann aber in einer alternativen Ausführungsform auch über einen externen Sensor erfolgen.

Bei der Durchführung der Probenanalyse ist es erforderlich, das Messergebnis zu dokumentieren. Daher kann an der mikrofluidischen Vorrichtung 3 ein Identitäts- bzw. Identifikationsmerkmal angeordnet sein, und somit eine direkte Zuordnung des ausgelesenen Signalverlaufs der einzelnen Testabschnitte in ein Messprotokoll übernommen werden kann. Ferner können unterschiedliche mikrofluidische Vorrichtungen 3 mit unterschiedlichen Testabschnitten eingesetzt werden, so dass im Identifikationsmerkmal bspw. auch eine Kennung bzw. Konfigurationsdaten der Testabschnitte hinterlegt sein können. Das Merkmal ist bevorzugt durch ein am Testsystem 1 kontaktlos wirkende Auslesevorrichtung auslesbar und kann bspw. durch einen 1D- oder 2D-Code gebildet sein, es ist jedoch auch eine Ausbildung als RFID-Merkmal möglich. Diese Auslesevorrichtung kann bspw. durch einen optischen 1D- bzw. 2D-Erfassungssensor bzw. eine RFID-Sende- und Empfangseinheit gebildet sein.

Die Ausführungsbeispiele zeigen mögliche Ausführungsvarianten des Testsystems 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus des Testsystems 1 dieses bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Testsystem
- 2: Dispensiersystem
- 3: Mikrofluidische Vorrichtung
- 4: Fotosensitiver Sensor
- 5: Fotodetektor

- 6: Behältnis
- 7: Beutel
- 8: Schnittstell
- 9: Rückflussventil
- 10: Mikropumpe

- 11: Düse
- 12: Fluidleitung
- 13: Probenaufbringöffnung
- 14: Mikrofluidischer Kanal
- 15: Reservoir

- 16: Aufnahmevorrichtung
- 17: Dispensiereinheit
- 18: Abdichtvorrichtung

## Patentansprüche

1. Verfahren zur Befüllung von Düsen (11) eines Dispensiersystems (2) eines Testsystems (1) umfassend das Dispensiersystem (2) und eine mikrofluidische Vorrichtung (3), wobei
- die mikrofluidische Vorrichtung (3) zumindest eine Probenaufbringöffnung (13) und einen mikrofluidischen Kanal (14), in dem ein Messbereich angeordnet ist, aufweist, und die Probenaufbringöffnung (13) mit dem mikrofluidischen Kanal (14) verbunden ist, und
- das Dispensiersystem (2) zumindest ein Behältnis (6) mit zumindest einem Reservoir mit einer Lösung umfasst, wobei das Behältnis (6) über eine Fluidleitung (12) mit zumindest einer Mikropumpe (10) verbunden ist, und anschließend zumindest eine Düse (11) angeordnet ist, die zum Aufbringen der Lösung in die Probenaufbringöffnung (13) der mikrofluidischen Vorrichtung (3) ausgelegt ist,
umfassend zumindest die Schritte
- Transportieren der Lösung vom Behältnis (6) über die Düse (11) des Dispensiersystems (2) zur Probenaufbringöffnung (13) der mikrofluidischen Vorrichtung (3) mittels der Mikropumpe (10),
- Weitertransportieren der Lösung in den Messbereich des mikrofluidischen Kanals (14) der mikrofluidischen Vorrichtung (3),
- Messung eines Lichtsignals im Messbereich der mikrofluidischen Vorrichtung (3) mit zumindest einem fotosensitiven Sensor (4) mit einer Mehrzahl von Fotodetektoren (5), und
- Abschalten der Mikropumpe (10) bei Detektion und/oder Veränderung des Lichtsignals, das signalisiert, dass die Lösung in den Messbereich des mikrofluidischen Kanals gelangt ist und daher auch in der Düse des Dispensiersystems (2) vorhanden ist.

2. Verfahren nach Anspruch 1, **dadurch gekennzeichnet, dass** das Dispensiersystem (2) zumindest zwei Behältnisse (6) mit Lösungen umfasst, wobei im ersten Behältnis (6) eine erste Lösung, insbesondere Chemilumineszenzlösung, und im zweiten Behältnis (6) eine weitere Lösung, vorzugsweise Enzymlösung, enthalten ist, und die Behältnisse (6) über eine Fluidleitung (12) mit der zumindest einen Mikropumpe (10) verbunden sind, und anschließend zumindest zwei Düsen (11) angeordnet sind, wobei eine erste Düse (11) zum Aufbringen der ersten Lösung, insbesondere Chemilumineszenzlösung, und die zweite Düse (11) zum Aufbringen der weiteren Lösung, vorzugsweise Enzymlösung, in die Probenaufbringöffnung (13) der mikrofluidischen Vorrichtung (3) ist, umfassend zumindest die Schritte:
- transportieren der ersten Lösung, insbesondere Chemilumineszenzlösung, und der weiteren Lösung, insbesondere Enzymlösung, vom jeweiligen Behältnis (6) über die jeweilige Düse (11) des Dispensiersystems (2) zur Probenaufbringöffnung (13) der mikrofluidischen Vorrichtung (3) mittels der zumindest einen Mikropumpe (10),
- Messung eines Lichtsignals, insbesondere Chemilumineszenzsignals, durch Reaktion der ersten Lösung, insbesondere Chemilumineszenzlösung, und der weiteren Lösung, insbesondere Enzymlösung, im Messbereich der mikrofluidischen Vorrichtung (3) mit zumindest einem fotosensitiven Sensor (4) mit einer Mehrzahl von Fotodetektoren (5),
- Abschalten der zumindest einen Mikropumpe (10) bei Detektion des Lichtsignals, insbesondere Chemilumineszenzsignals.

3. Verfahren nach Anspruch 1 oder 2, **dadurch gekennzeichnet, dass**
(a) die erste Lösung, insbesondere Chemilumineszenzlösung, über die erste Düse (11) zur Probenaufbringöffnung (13) der mikrofluidischen Vorrichtung (3) mittels der zumindest einen Mikropumpe (10) transportiert wird und in weiterer Folge in den Messbereich der mikrofluidischen Vorrichtung (3) gesaugt wird,
(b) eine Messung des Lichtsignals im Messbereich der mikrofluidischen Vorrichtung (3) mit dem fotosensitiven Sensor (4) mit einer Mehrzahl von Fotodetektoren (5) erfolgt,
(c) die Mikropumpe (10) bei Änderung des Lichtsignals, insbesondere bei Erhöhung durch den optofluidischen Linseneffekt, abgeschaltet wird,
(d) die weitere Lösung, insbesondere Enzymlösung, über die weitere Düse (11) zur Probenaufbringöffnung (13) der mikrofluidischen Vorrichtung (3) mittels Mikropumpe (10) transportiert wird und in weiterer Folge in den Messbereich der mikrofluidischen Vorrichtung (3) gesaugt wird,
(e) das Lichtsignal, insbesondere Chemilumineszenzsignal, im Messbereich der mikrofluidischen Vorrichtung (3) mit dem fotosensitiven Sensor (4) mit einer Mehrzahl von Fotodetektoren (5) detektiert wird,
(f) die Mikropumpe (10) bei Detektion des Lichtsignals, insbesondere Chemilumineszenzsignals, abgeschaltet wird.

4. Verfahren nach einem der Ansprüche 1 bis 3, **dadurch gekennzeichnet, dass** das Lichtsignal durch einen optofluidischen Linseneffekt geändert wird, insbesondere erhöht wird, sobald die erste Lösung in den mikrofluidischen Kanal (14) transportiert wird.

5. Verfahren nach einem der Ansprüche 1 bis 4, **dadurch gekennzeichnet, dass** weitere Schritte durchgeführt werden, wobei
(g) eine zusätzliche Lösung, insbesondere Waschlösung, über eine weitere Düse (11) zur Probenaufbringöffnung (13) der mikrofluidischen Vorrichtung (3) mittels der Mikropumpe (10) transportiert wird und in weiterer Folge in den Messbereich der mikrofluidischen Vorrichtung (3) gesaugt wird,
(h) die Verschiebung des zuvor gemessenen Lichtsignals im Messbereich der mikrofluidischen Vorrichtung (3) mit dem fotosensitiven Sensor (4) mit einer Mehrzahl von Fotodetektoren (5) gemessen wird,
(i) die Mikropumpe (10) bei Detektion der Lichtsignalverschiebung abgeschaltet wird.

6. Verfahren nach einem der Ansprüche 1 bis 5, **dadurch gekennzeichnet, dass** die Düsen (11) eine Auslassöffnung aufweisen, die nach Abschalten der Mikropumpe (10) durch zumindest eine Abdichtvorrichtung (18), insbesondere luftdicht, verschlossen wird.

7. Verfahren nach einem der Ansprüche 1 bis 6, **dadurch gekennzeichnet, dass** durch die Kombination der Mikropumpe (10) mit der Düse (11) ein Strahl aus Nanolitertropfen der jeweiligen Lösung erzeugt wird.

8. Verfahren nach einem der Ansprüche 1 bis 7, **dadurch gekennzeichnet, dass** nach dem Befüllen der Düsen (11) des Dispensiersystems (2) eine biologische Probe in die Probenaufbringöffnung (13) gegeben wird und in den mikrofluidischen Kanal (14) transportiert wird, wo Zielmoleküle der biologischen Probe über spezifische Bindungsstellen mit Molekülen reagieren, die in Testabschnitten des Messbereichs angeordnet sind, und durch Zugabe der Lösungen aus dem Dispensiersystem eine chemische bzw. biochemische Reaktion unter Lichtabgabe stattfindet, und ein Lichtsignal gebildet wird, das durch den fotosensitiven Sensor (4) mit einer Mehrzahl von Fotodetektoren (5) detektiert wird.

9. Testsystem (1), insbesondere für ein Verfahren nach einem der Ansprüche 1 bis 8, umfassend zumindest ein Dispensiersystem (2), eine mikrofluidische Vorrichtung (3), zumindest einen fotosensitiven Sensor (4) mit einer Mehrzahl von Fotodetektoren (5), sowie Steuerungsmodule, wobei
- die mikrofluidische Vorrichtung (3) eine Probenaufbringöffnung (13) und einen mikrofluidischen Kanal (14), in dem ein Messbereich angeordnet ist, aufweist, und die Probenaufbringöffnung (13) mit dem mikrofluidischen Kanal (14) verbunden ist, und die mikrofluidische Vorrichtung (3) in einer Aufnahmevorrichtung (16) des Testsystems (1) lösbar angeordnet ist, sodass der Messbereich über den Fotodetektoren (5) des fotosensitiven Sensors (4) angeordnet ist, und
- das Dispensiersystem (2) zumindest ein Behältnis (6) mit zumindest einem Reservoir mit einer Lösung umfasst, wobei das Behältnis (6) über eine Fluidleitung (12) mit zumindest einer Mikropumpe (10) verbunden ist, und anschließend zumindest eine Düse (11) angeordnet ist, die zum Aufbringen der Lösung in die Probenaufbringöffnung (13) der mikrofluidischen Vorrichtung (3) ausgelegt ist, **gekennzeichnet dadurch, dass** die Steuerungsmodule ausgelegt sind das Testsystem (1) so zu steuern, dass
- die Lösung vom Behältnis (6) über die Düse (11) des Dispensiersystems (2) zur Probenaufbringöffnung (13) mittels der Mikropumpe (10) transportiert wird,
- die Lösung weiter in den Messbereich des mikrofluidischen Kanals (14) transportiert wird,
- mit dem fotosensitiven Sensor (4) im Messbereich ein Lichtsignal gemessen wird, und
- bei Detektion und/oder Veränderung des Lichtsignals, das signalisiert, dass die Lösung in den Messbereich des mikrofluidischen Kanals (14) gelangt ist und daher auch in der Düse (11) des Dispensiersystems (2) vorhanden ist, die Mikropumpe (10) abgeschaltet wird.

10. Testsystem (1) nach Anspruch 9, **dadurch gekennzeichnet, dass** das Dispensiersystem (2) zumindest zwei Behältnisse (6) mit Lösungen umfasst, wobei im ersten Behältnis (6) eine erste Lösung, insbesondere Chemilumineszenzlösung, und im zweiten Behältnis (6) eine weitere Lösung, vorzugsweise Enzymlösung, enthalten ist, und die Behältnisse (6) über eine Fluidleitung (12) mit der zumindest einen Mikropumpe (10) verbunden sind, und anschließend zumindest zwei Düsen (11) angeordnet sind, wobei eine erste Düse (11) zum Aufbringen der ersten Lösung, insbesondere Chemilumineszenzlösung, und die zweite Düse (11) zum Aufbringen der weiteren Lösung, vorzugsweise Enzymlösung, in die Probenaufbringöffnung (13) der mikrofluidischen Vorrichtung (3) ist.

11. Testsystem (1) nach Anspruch 9 oder 10 **dadurch gekennzeichnet, dass** die Behältnisse (6) eine Schnittstelle (8) mit einem Port zur Verbindung an einen Standard Luer Konus der Fluidleitung (12) aufweisen.

12. Testsystem (1) nach einem der Ansprüche 9 bis 11, **dadurch gekennzeichnet, dass** in der Fluidleitung (12) zwischen Behältnis (6) und Mikropumpe (10) zumindest ein Rückflussventil (9), insbesondere mit Vorspannung, angeordnet ist.

13. Testsystem (1) nach einem der Ansprüche 9 bis 12, **dadurch gekennzeichnet, dass** zumindest eine Abdichtvorrichtung (18) im Bereich einer Austrittsöffnung der Düsen (11) angeordnet ist.

14. Testsystem (1) nach einem der Ansprüche 9 bis 13, **dadurch gekennzeichnet, dass** das Dispensiersystem (2) zumindest zwei Dispensiereinheiten (17) umfasst, wobei in der ersten Dispensiereinheit (17) zumindest ein Behältnis (6) mit einer ersten Lösung, insbesondere Chemilumineszenzlösung, angeordnet ist, das über eine Fluidleitung (12) mit zumindest einer Mikropumpe (10) und anschließend einer Düse (11) verbunden ist, und in der zweiten Dispensiereinheit (17) zumindest ein Behältnis (6) mit einer weiteren Lösung, insbesondere Enzymlösung, angeordnet ist, das ebenfalls über eine Fluidleitung (12) mit zumindest einer Mikropumpe (10) und anschließend einer Düse (11) verbunden ist und gegebenenfalls in der dritten Dispensiereinheit (17) zumindest ein Behältnis (6) mit einer zusätzlichen Lösung, insbesondere Waschlösung, angeordnet ist, das ebenfalls über eine Fluidleitung (12) mit zumindest einer Mikropumpe (10) und anschließend einer Düse (11) verbunden ist.

15. Testsystem (1) nach Anspruch 14, **dadurch gekennzeichnet, dass** in jeder Dispensiereinheit (17) am Behältnis (6) eine Schnittstelle (8) mit einem Port zur Verbindung an einen Standard Luer Konus und in der Fluidleitung (12) zwischen Behältnis (6) und Mikropumpe (10) zumindest ein Rückflussventil (9), insbesondere mit Vorspannung, angeordnet ist.

## Claims

1. Method for filling nozzles (11) of a dispensing system (2) of a test system (1) comprising the dispensing system (2) and a microfluidic device (3), wherein
- the microfluidic device (3) comprises at least one sample receiving opening (13) and a microfluidic passage (14) in which a measuring region is disposed, and the sample receiving opening (13) is connected to the microfluidic passage (14), and
- the dispensing system (2) comprises at least one container (6) with at least one reservoir containing a solution, wherein the container (6) is connected via a fluid line (12) to at least one micro-pump (10), following which at least one nozzle (11) is provided which is configured for dispensing the solution into the sample receiving opening (13) of the microfluidic device (3),
comprising at least the following steps:
- transporting the solution from the container (6) via the nozzle (11) of the dispensing system (2) to the sample receiving opening (13) of the microfluidic device (3) by means of the micro-pump (10),
- transporting the solution further into the measuring region of the microfluidic passage (14) of the microfluidic device (3),
- measuring a light signal in the measuring region of the microfluidic device (3) using at least one photosensitive sensor (4) with a plurality of photodetectors (5), and
- deactivating the micro-pump (10) when the light signal is detected and/or is modified, which indicates that the solution has reached the measuring region of the microfluidic passage and thus is also present in the nozzle of the dispensing system (2).

2. The method as claimed in claim 1, **characterized in that** the dispensing system (2) comprises at least two containers (6) containing solutions, wherein the first container (6) contains a first solution, in particular a chemiluminescent solution, and the second container (6) contains a further solution, preferably an enzyme solution, and the containers (6) are connected to the at least one micro-pump (10) via a fluid line (12), following which at least two nozzles (11) are disposed, wherein a first nozzle (11) is used to dispense the first solution, in particular the chemiluminescent solution, and the second nozzle (11) is used to dispense the other solution, preferably an enzyme solution, into the sample receiving opening (13) of the microfluidic device (3), comprising at least the following steps:
- transporting the first solution, in particular the chemiluminescent solution, and the further solution, in particular the enzyme solution, from the respective container (6) via the respective nozzle (11) of the dispensing system (2) to the sample receiving opening (13) of the microfluidic device (3) by means of the at least one micro-pump (10),
- measuring a light signal, in particular a chemiluminescence signal, caused by a reaction of the first solution, in particular the chemiluminescent solution, with the other solution, in particular the enzyme solution, in the measuring region of the microfluidic device (3) using at least one photosensitive sensor (4) with a plurality of photodetectors (5),
- deactivating the at least one micro-pump (10) when the light signal, in particular the chemiluminescence signal, is detected.

3. The method as claimed in claim 1 or claim 2, **characterized in that**
(a) the first solution, in particular the chemiluminescent solution, is transported via the first nozzle (11) to the sample receiving opening (13) of the microfluidic device (3) by means of the at least one micro-pump (10) and is subsequently sucked into the measuring region of the microfluidic device (3),
(b) a measurement is taken of the light signal in the measuring region of the microfluidic device (3) using the photosensitive sensor (4) with a plurality of photodetectors (5),
(c) the micro-pump (10) is deactivated if there is a change in the light signal, in particular an intensification due to the optofluidic lens effect,
(d) the other solution, in particular the enzyme solution, is transported via the other nozzle (11) to the sample receiving opening (13) of the microfluidic device (3) by means of the micro-pump (10) and is subsequently sucked into the measuring region of the microfluidic device (3),
(e) the light signal, in particular the chemiluminescence signal, in the measuring region of the microfluidic device (3) is detected using the photosensitive sensor (4) with a plurality of photodetectors (5),
(f) the micro-pump (10) is deactivated when the light signal, in particular the chemiluminescence signal, is detected.

4. The method as claimed in one of claims 1 to 3, **characterized in that** the light signal is modified by an optofluidic lens effect, in particular intensified, as soon as the first solution is transported into the microfluidic passage (14).

5. The method as claimed in one of claims 1 to 4, **characterized in that** other steps are implemented, wherein
(g) an additional solution, in particular a washing solution, is transported via a further nozzle (11) to the sample receiving opening (13) of the microfluidic device (3) by means of the micro-pump (10) and is subsequently sucked into the measuring region of the microfluidic device (3),
(h) the shift in the previously measured light signal is measured in the measuring region of the microfluidic device (3) using the photosensitive sensor (4) with a plurality of photodetectors (5),
(i) the micro-pump (10) is deactivated when the shift in the light signal is detected.

6. The method as claimed in one of claims 1 to 5, **characterized in that** the nozzles (11) have an outlet orifice which is closed by means of at least one sealing device (18), in particular so as to be airtight, after the micro-pump (10) has been deactivated.

7. The method as claimed in one of claims 1 to 6, **characterized in that** a stream of nanolitre droplets of the respective solution is generated because of the combination of the micro-pump (10) and nozzle (11).

8. The method as claimed in one of claims 1 to 7, **characterized in that** after filling the nozzles (11) of the dispensing system (2), a biological sample is introduced into the sample receiving opening (13) and transported into the microfluidic passage (14) where target molecules of the biological sample react via specific binding sites with molecules disposed in test sections of the measuring region, and by adding the solutions from the dispensing system, a chemical or biochemical reaction takes place, bringing about the emission of light and a light signal is generated which is detected by means of the photosensitive sensor (4) with a plurality of photodetectors (5).

9. A test system (1), in particular for a method as claimed in one of claims 1 to 8, comprising at least one dispensing system (2), a microfluidic device (3), at least one photosensitive sensor (4) with a plurality of photodetectors (5), as well as control modules, wherein
- the microfluidic device (3) has a sample receiving opening (13) and a microfluidic passage (14) in which a measuring region is disposed, and the sample receiving opening (13) is connected to the microfluidic passage (14) and the microfluidic device (3) is releasably disposed in a retaining device (16) of the test system (1) so that the measuring region is disposed above the photodetectors (5) of the photosensitive sensor (4),
- and the dispensing system (2) comprises at least one container (6) with at least one reservoir containing a solution, wherein the container (6) is connected via a fluid line (12) to at least one micro-pump (10), following which at least one nozzle (11) is provided which is configured so as to dispense the solution into the sample receiving opening (13) of the microfluidic device (3),
- **characterized in that** the control modules are configured so as to control the test system (1) in a manner such that
- the solution is transported from the container (6) via the nozzle (11) of the dispensing system (2) to the sample receiving opening (13) by means of the micro-pump (10),
- the solution is transported further into the measuring region of the microfluidic passage (14),
- a light signal is measured by the photosensitive sensor (4) in the measuring region, and
- when the light signal is detected and/or is modified, which indicates that the solution has reached the measuring region of the microfluidic passage (14) and thus is also present in the nozzle (11) of the dispensing system (2), the micro-pump (10) is deactivated.

10. The test system (1) as claimed in claim 9, **characterized in that** the dispensing system (2) comprises at least two containers (6) containing solutions, wherein the first container (6) contains a first solution, in particular a chemiluminescent solution, and the second container (6) contains another solution, preferably an enzyme solution, and the containers (6) are connected via a fluid line (12) to the at least one micro-pump (10) which is followed by at least two nozzles (11), wherein a first nozzle (11) is used to dispense the first solution, in particular the chemiluminescent solution, and the second nozzle (11) is used to dispense the further solution, preferably an enzyme solution, into the sample receiving opening (13) of the microfluidic device (3).

11. The test system (1) as claimed in claim 9 or claim 10, **characterized in that** the containers (6) have an interface (8) with a port in order to provide a connection to a standard Luer cone of the fluid line (12).

12. The test system (1) as claimed in one of claims 9 to 11, **characterized in that** at least one check valve (9), in particular with biasing means, is disposed in the fluid line (12) between the container (6) and micro-pump (10).

13. The test system (1) as claimed in one of claims 9 to 12, **characterized in that** at least one sealing device (18) is disposed in the region of an outlet orifice of the nozzles (11).

14. The test system (1) as claimed in one of claims 9 to 13, **characterized in that** the dispensing system (2) comprises at least two dispenser units (17), wherein at least one container (6) containing a first solution, in particular a chemiluminescent solution, is disposed in the first dispenser unit (17) and is connected via a fluid line (12) to at least one micro-pump (10) and subsequently to a nozzle (11), and at least one container (6) containing another solution, in particular an enzyme solution, is disposed in the second dispenser unit (17) and is likewise connected via a fluid line (12) to at least one micro-pump (10) and subsequently to a nozzle (11), and optionally at least one container (6) containing an additional solution, in particular washing solution, is disposed in the third dispenser unit (17) and is likewise connected via a fluid line (12) to at least one micro-pump (10) and subsequently to a nozzle (11).

15. The test system (1) as claimed in claim 14, **characterized in that** the container (6) in each dispenser unit (17) is provided with an interface (8) with a port in order to establish a connection to a standard Luer cone, and at least one check valve (9), in particular with biasing means, is disposed in the fluid line (12) between the container (6) and micro-pump (10).

## Revendications

1. Procédé de remplissage de buses (11) d'un système de distribution (2) d'un système de test (1) comprenant le système de distribution (2) et un dispositif microfluidique (3),
- le dispositif microfluidique (3) comprenant au moins une ouverture d'application d'échantillons (13) et un canal microfluidique (14), dans lequel une zone de mesure est disposée, et l'ouverture d'application d'échantillons (13) étant relié avec le canal microfluidique (14) et
- le système de distribution (2) comprenant au moins un récipient (6) avec au moins un réservoir avec une solution, le récipient (6) étant relié, par l'intermédiaire d'une conduite de fluide (12), avec au moins une micro-pompe (10), puis au moins une buse (11) est disposée, qui est conçue pour l'introduction de la solution dans l'ouverture d'application d'échantillons (13) du dispositif microfluidique (3),
comprenant au moins les étapes suivantes
- transport de la solution du récipient (6) en passant par la buse (11) du système de distribution (2) vers l'ouverture d'application d'échantillons (13) du dispositif microfluidique (3) au moyen de la micro-pompe (10),
- transport ultérieur de la solution vers la zone de mesure du canal microfluidique (14) du dispositif microfluidique (3),
- mesure d'un signal lumineux dans la zone de mesure du dispositif microfluidique (3) avec au moins un capteur photosensible (4) avec une pluralité de photodétecteurs (5), et
- arrêt de la micro-pompe (10) lors de la détection et/ou d'une variation du signal lumineux qui signale que la solution est arrivée dans la zone de mesure du canal microfluidique et donc est également présente dans la buse du système de distribution (2).

2. Procédé selon la revendication 1, **caractérisé en ce que** le système de distribution (2) comprend au moins deux récipients (6) avec des solutions, une première solution, plus particulièrement une solution chimio-luminescente, étant contenue dans le premier récipient (6) et une autre solution, de préférence une solution d'enzymes, étant contenue dans le deuxième récipient (6) et les récipients (6) étant reliés par l'intermédiaire d'une conduite de fluide (12) avec l'au moins une micro-pompe (10), puis au moins deux buses (11) sont disposées, une première buse (11) étant conçue pour l'application de la première solution, plus particulièrement une solution chimio-luminescente, et la deuxième buse (11) étant conçue pour l'introduction de l'autre solution, de préférence une solution d'enzymes, dans l'ouverture d'application d'échantillon (13) du dispositif microfluidique (3), comprenant au moins les étapes suivantes :
- transport de la première solution, plus particulièrement une solution chimio-luminescente, et de l'autre solution, plus particulièrement une solution d'enzymes, du récipient (6) concerné par l'intermédiaire de la buse (11) concernée du système de distribution (2) vers l'ouverture d'application d'échantillon (13) du dispositif microfluidique (3) au moyen de l'au moins une micro-pompe (10),
- mesure d'un signal lumineux, plus particulièrement d'un signal de chimio-luminescence, par réaction de la première solution, plus particulièrement une solution chimio-luminescente, et de l'autre solution, plus particulièrement une solution d'enzymes, dans la zone de mesure du dispositif microfluidique (3) avec au moins un capteur photosensible (4) avec une pluralité de photodétecteurs (5),
- arrêt de l'au moins une micro-pompe (10) lors de la détection du signal lumineux, plus particulièrement du signal de chimio-luminescence.

3. Procédé selon la revendication 1 ou 2, **caractérisé en ce que**
(a) la première solution, plus particulièrement la solution chimio-luminescente, est transportée, par l'intermédiaire de la première buse (11), vers l'ouverture d'application d'échantillon (13) du dispositif microfluidique (3) au moyen de l'au moins une micro-pompe (10) et est ensuite aspirée vers la zone de mesure du dispositif microfluidique (3),
(b) une mesure du signal lumineux a lieu dans la zone de mesure du dispositif microfluidique (3) avec le capteur photosensible (4) avec une pluralité de photodétecteurs (5),
(c) la micro-pompe (10) est arrêtée lors d'une variation du signal lumineux, plus particulièrement lors d'une augmentation du fait de l'effet de lentille opto-fluidique,
(d) l'autre solution, plus particulièrement la solution d'enzymes, est transportée, par l'intermédiaire de l'autre buse (11), vers l'ouverture d'application d'échantillon (13) du dispositif microfluidique (3) au moins d'une micro-pompe (10) et est ensuite aspirée vers la zone de mesure du dispositif microfluidique (3),
(e) le signal lumineux, plus particulièrement le signal de chimio-luminescence, est détecté dans la zone de mesure du dispositif microfluidique (3) avec le capteur photosensible (4) avec une pluralité de photodétecteurs (5),
(f) la micro-pompe (10) est arrêtée lors de la détection du signal lumineux, plus particulièrement le signal de chimio-luminescence.

4. Procédé selon l'une des revendications 1 à 3, **caractérisé en ce que** le signal lumineux est modifié par un effet de lentille opto-fluidique, plus particulièrement augmenté, dès que la première solution est transportée vers le canal microfluidique (14).

5. Procédé selon l'une des revendications 1 à 4, **caractérisé en ce que** des étapes supplémentaires sont exécutées,
(g) une solution supplémentaire, plus particulièrement une solution de lavage, est transportée, par l'intermédiaire d'une autre buse (11) vers l'ouverture d'application d'échantillon (13) du dispositif microfluidique (3) au moyen de la micro-pompe (10) et est ensuite aspirée vers la zone de mesure du dispositif microfluidique (3),
(h) le décalage du signal lumineux auparavant mesuré dans la zone de mesure du dispositif microfluidique (3) est mesuré avec le capteur photosensible (4) avec une pluralité de photodétecteurs (5),
(i) la micro-pompe (10) est arrêtée lors de la détection d'un décalage du signal lumineux.

6. Procédé selon l'une des revendications 1 à 5, **caractérisé en ce que** les buses (11) comprennent une ouverture de sortie, qui est obturée, plus particulièrement de manière étanche à l'air, après l'arrêt de la micro-pompe (10) par au moins un dispositif d'étanchéité (18).

7. Procédé selon l'une des revendications 1 à 6, **caractérisé en ce que** la combinaison de la micro-pompe (10) avec la buse (11) permet d'obtenir un jet constitué de gouttelettes de l'ordre du nanolitre de la solution concernée.

8. Procédé selon l'une des revendications 1 à 7, **caractérisé en ce que**, après le remplissage des buses (11) du système de distribution (2), un échantillon biologique est introduit dans l'ouverture d'application d'échantillon (13) et est transporté vers le canal microfluidique (14), où des molécules cibles de l'échantillon biologique réagissent, par l'intermédiaire de sites de liaison spécifiques, avec des molécules, qui sont disposées dans des portions de test de la zone de mesure et, grâce à l'ajout de solutions à partir du système de distribution, une réaction chimique ou biochimique a lieu avec émission de lumière et un signal lumineux est généré, qui est détecté par le capteur photosensible (4) avec une pluralité de photodétecteurs (5).

9. Système de test (1), plus particulièrement pour un procédé selon l'une des revendications 1 à 8, comprenant au moins un système de distribution (2), un dispositif microfluidique (3) et au moins un capteur photosensible (4) avec une pluralité de photodétecteurs (5), ainsi que des modules de commande,
- le dispositif microfluidique (3) comprenant une ouverture d'application d'échantillon (13) et un canal microfluidique (14), dans lequel se trouve une zone de mesure, et l'ouverture d'application d'échantillon (13) étant reliée avec le canal microfluidique (14) et le dispositif microfluidique (3) étant disposé de manière amovible dans un dispositif de logement (16) du système de test (1), de façon à ce que la zone de mesure soit disposée au-dessus des photodétecteurs (5) du capteur photosensible (4) et
- le système de distribution (2) comprend au moins un récipient (6) avec au moins un réservoir avec une solution, le récipient (6) étant relié par l'intermédiaire d'une conduite de fluide (12) avec au moins une micro-pompe (10) puis au moins une buse (11) est disposée, qui est conçue pour l'application de la solution dans l'ouverture d'application d'échantillon (13) du dispositif microfluidique (3),
**caractérisé en ce que** les modules de commandes sont conçus pour commander le système de test (1) de façon à ce que
- la solution soit transportée du récipient (6), par l'intermédiaire de la buse (11), du système de distribution (2) vers l'ouverture d'application d'échantillon (13) au moyen de la micro-pompe (10),
- la solution soit transportée plus loin vers la zone de mesure du canal microfluidique (14),
- avec le capteur photosensible (4) dans la zone de mesure, un signal lumineux est mesuré et
- lors de la détection et/ou d'une variation du signal lumineux qui signale que la solution est arrivée dans la zone de mesure du canal microfluidique (14) et donc est présente également dans la buse (11) du système de distribution (2), la micro-pompe (10) est arrêtée.

10. Système de test (1) selon la revendication 9, **caractérisé en ce que** le système de distribution (2) comprend au moins deux récipients (6) avec des solutions, une première solution, plus particulièrement une solution chimio-luminescente, étant contenue dans le premier récipient (6) et une autre solution, de préférence une solution d'enzymes, étant contenue dans le deuxième récipient (6) et les récipients (6) étant reliés par l'intermédiaire d'une conduite de fluide (12) avec l'au moins une micro-pompe (10) puis au moins deux buses (11) sont disposées, une première buse (11) étant conçue pour l'application de la première solution, plus particulièrement une solution chimio-luminescente, et la deuxième buse (11) étant conçue pour l'application de l'autre solution, de préférence une solution d'enzymes, dans l'ouverture d'application d'échantillon (13) du dispositif microfluidique (3).

11. Système de test (1) selon la revendication 9 ou 10, **caractérisé en ce que** les récipients (6) comprennent une interface (8) avec un port pour la connexion à un cône Standard Luer de la conduite de fluide (12).

12. Système de test (1) selon l'une des revendications 9 à 11, **caractérisé en ce que**, dans la conduite de fluide (12), entre le récipient (6) et la micro-pompe (10), se trouve au moins un clapet anti-retour (9), plus particulièrement avec précontrainte.

13. Système de test (1) selon l'une des revendications 9 à 12, **caractérisé en ce qu'**au moins un dispositif d'étanchéité (18) est disposé au niveau d'une ouverture de sortie des buses (11).

14. Système de test (1) selon l'une des revendications 9 à 13, **caractérisé en ce que** le système de distribution (2) comprend au moins deux unités de distribution (17), moyennant quoi, dans la première unité de distribution (17), est disposé au moins un récipient (6) avec une première solution, plus particulièrement une solution chimio-luminescente, qui est relié par l'intermédiaire d'une conduite de fluide (12) avec au moins une micro-pompe (10) puis une buse (11) et, dans la deuxième unité de distribution (17), est disposé au moins un récipient (6) avec une autre solution, plus particulièrement une solution d'enzymes, qui est également relié par l'intermédiaire d'une conduite de fluide (12) avec au moins une micro-pompe (10) puis une buse (11) et, le cas échéant, dans la troisième unité de distribution (17), se trouve au moins un récipient (6) avec une solution supplémentaire, plus particulièrement une solution de lavage, qui est également relié par l'intermédiaire d'une conduite de fluide (12) avec au moins une micro-pompe (10) puis une buse (11).

15. Système de test (1) selon la revendication 14, **caractérisé en ce que**, dans chaque unité de distribution (17), sur le récipient (6), se trouve une interface (8) avec un port pour la connexion à un cône Standard Luer et, dans la conduite de fluide (12), entre le récipient (6) et la micro-pompe (10), se trouve au moins un clapet anti-retour (9), plus particulièrement avec précontrainte.
